# EUROPÄISCHE PATENTSCHRIFT

(11) **EP 0 616 236 B1**
(45) Veröffentlichungstag und Bekanntmachung des Hinweises auf die Patenterteilung: **22.01.1997**
(21) Anmeldenummer: 93810789.3
(22) Anmeldetag: 15.11.1993
(51) Int. Cl.: G02B 6/38, H01R 13/633

(54) **Steckverbindung für einen Lichtwellenleiter**
Connector for a lightguide
Connecteur pour un guide d'ondes optique

(30) Priorität: 26.11.1992 CH 3620/92
(43) Veröffentlichungstag der Anmeldung: 21.09.1994
(73) Patentinhaber: DIAMOND S.A., CH-6616 Losone-Locarno (CH)
(72) Erfinder: Marazzi, Silvio, CH-6654 Cavigliano (CH); De Marchi, Silverio, CH-6646 Contra (CH)
(74) Vertreter: Wenger, René

(56) Entgegenhaltungen:
- EP-A- 0 119 013
- EP-A- 0 195 432
- EP-A- 0 468 671
- DE-A- 2 813 537
- DE-U- 9 102 805
- PATENT ABSTRACTS OF JAPAN vol. 9, no. 109 (P-355)(1832) 14. Mai 1985 & JP-A-59 231 507 (MAIRU SUTOON)

## Beschreibung

Die Erfindung betrifft eine Steckverbindung für einen Lichtwellenleiter gemäss dem Oberbegriff von Anspruch 1. Derartige Steckverbindungen mit einer Einrastvorrichtung stellen eine Alternative zu den geschraubten Steckverbindungen dar, bei denen das Steckerteil in der Regel mit Hilfe einer Überwurfmutter am Buchsenteil fixiert wird.

Ein Buchsenteil mit federnden Sperrklinken ist beispielsweise durch die EP-A-468 671 bekannt geworden. Die Stecker für derartige Steckverbindungen sind vom sogenannten Push-Pull-Typ, bei dem das Steckergehäuse relativ zur Stifthalterung axial verschiebbar gehalten ist. Durch Ziehen am Steckergehäuse werden die Sperrklinken aufgespreizt und der Stecker kann herausgezogen werden. Erfolgt dagegen ein Zug am Kabel, das fest mit der Stifthalterung verbunden ist, so lässt sich der Stecker nicht aus dem Buchsenteil herausziehen.

Aus der EP-A-119 013 oder aus der GB-A-2 261 742 sind aber auch bereits solche Steckverbindungen bekannt geworden, bei denen die Sperrklinke durch ein separat betätigbares Entriegelungselement gelöst wird. Dieses ist jedoch als Schieber ausgebildet, dessen Entriegelungskraft der Zugkraft zum Ausziehen des Steckerteils entgegenwirkt.

Ein Nachteil der bekannten Steckverbindungen besteht im relativ komplizierten Aufbau des Steckerteils. Ausserdem wird bei den Push-Pull-Steckern die Zugkraft zunächst einmal solange auf das Buchsenteil übertragen, bis die Sperrklinke ganz ausgerastet ist. Bei den Steckern mit Entriegelungsschieber muss dagegen zunächst eine entgegengesetzte Kraft aufgebracht werden, was den Steckerstift unnötig belastet und die Handhabung erschwert.

Es ist daher eine Aufgabe der Erfindung, eine Steckverbindung der eingangs genannten Art zu schaffen, welche einfacher im Aufbau und in der Handhabung ist und bei der das Steckerteil ohne Zugbelastung oder Druckbelastung auf das Buchsenteil herausgezogen werden kann. Es soll ausserdem ein hoher Grad von Betriebssicherheit erreicht werden. Diese Aufgabe wird erfindungsgemäss mit einer Steckverbindung gelöst, welche die Merkmale im Anspruch 1 aufweist. Der neben dem Sperrelement angeordnete Entriegelungshebel ermöglicht es, die Sperrklinke aus dem Sperrelement auszurasten, ohne dass auf das Buchsenteil eine Zugkraft ausgeübt wird. Die Kräfte für die Entriegelung und für das Herausziehen des Steckers sind praktisch voneinander getrennt, wobei der Entriegelungshebel eine einfache Handhabung ermöglicht. Die Sperrklinke ist dabei am Buchsenteil angeordnet, wobei der Entriegelungshebel am Steckerteil gelagert ist. Je nach Dimensionierung der beiden Hebelarme des Doppelhebels kann dadurch eine Kraftverstärkung erreicht werden, so dass auch Sperrklinken mit starker Federwirkung leich geöffnet werden können.

Der Entriegelungshebel hat vorzugsweise ein Paar Gelenknokken, welche in eine Lagergabel am Steckerteil einrastbar sind. Dadurch wird die Montage des Entriegelungshebels wesentlich erleichtert.

Das Steckerteil weist vorzugsweise ein Steckergehäuse auf, mit dem das Sperrelement und die Lagergabel einstückig ausgebildet sind. Dies ermöglicht die Fertigung als kostengünstiges Kunststoff-Spritzgussteil. Auf die gleiche Weise kann auch das Buchsenteil ein inneres Buchsengehäuse aufweisen, welches einstückig mit einer federnden Zunge ausgebildet ist, an welcher die Sperrklinke angeordnet ist.

Ein besonders hoher Grad an Betriebssicherheit kann erreicht werden, wenn der Entriegelungshebel einen Schlüsselabschnitt mit einer aus Vorsprüngen und Aussparungen bestehenden Codierung aufweist und wenn der Schlüsselabschnitt in einen Sicherungsabschnitt am Buchsenteil mit einer korrespondierenden Codierung eingreift, wobei der Schlüsselabschnitt und der Sicherungsabschnitt so angeordnet sind, dass die Sperrklinke nur bei übereinstimmender Codierung einrastbar ist. Auf diese Weise kann beispielsweise verhindert werden, dass an einem Gerät irrtümlich Steckerteile falsch eingesteckt werden. Da der Entriegelungshebel ein separates Bauteil ist, lassen sich relativ leicht Entriegelungshebel mit unterschiedlicher Codierung herstellen, welche dann wahlweise auf die Steckerteile aufmontiert werden. Vorzugsweise ist dabei auch der Sicherungsabschnitt so ausgestaltet, dass er leicht ausgetauscht werden kann. Dies kann besonders vorteilhaft dadurch erreicht werden, dass das innere Buchsengehäuse in ein äusseres Buchsengehäuse eingeschoben ist, dass das innere Buchsengehäuse im äusseren Buchsengehäuse durch einen Endabschnitt gesichert ist, der an einem der Buchsengehäuse befestigt ist und dass dieser Endabschnitt mit dem Sicherungsabschnitt versehen ist. Der Sicherungsabschnitt erfüllt so eine Doppelfunktion, indem er einerseits die beiden Buchsengehäuse zusammenhält und indem er anderseits die Codierung trägt.

Zusammengehörige Codierungen am Entriegelungshebel und am Sicherungsabschnitt lassen sich auch vorteilhaft durch gleiche Einfärbung hervorheben. Da die Endabschnitte und die Entriegelungshebel separate Bauteile sind, lassen sich bei gleichen Buchsenteilen und gleichen Steckerteilen leicht zusammengehörige Paare mit unterschiedlicher Codierung optisch voneinander unterscheiden.

Weitere Vorteile und Einzelmerkmale der Erfindung ergeben sich aus der nachfolgenden Beschreibung eines Ausführungsbeispiels und aus den Zeichnungen. Es zeigen:
- Figur 1: eine perspektivische Darstellung eines Steckerteils,
- Figur 2: eine perspektivische Darstellung eines vereinfacht dargestellten Buchsenteils zur Aufnahme des Steckerteils gemäss Figur 1,
- Figur 3: eine in ihre Einzelteile zerlegte Steckverbindung mit den Merkmalen der Erfindung,
- Figur 4: die Steckverbindung gemäss Figur 3 im zusammengebauten Zustand,
- Figur 5: einen Schnitt durch die Ebene I-I gemäss Figur 4, und
- Figur 6: einen Schnitt durch die Ebene II-II gemäss Figur 4.

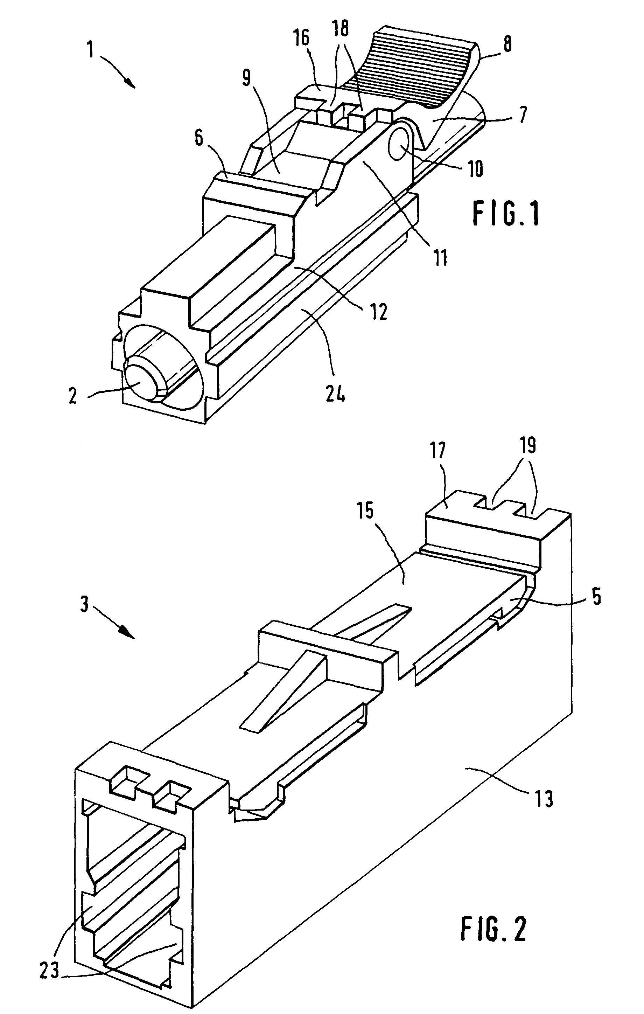

Figur 1 zeigt ein Steckerteil 1 mit einem im Querschnitt etwa rechteckigen Steckergehäuse 12, das vorzugsweise aus Kunststoffmaterial gefertigt ist. Seitliche Führungsleisten 24 sorgen dafür, dass das Steckerteil lagerichtig eingesteckt wird. Der Steckerstift 2 ragt vorne etwas aus dem Steckergehäuse.

Am rückwärtigen Ende des Steckergehäuses ist in einer Lagergabel 11 mit Hilfe von Gelenknocken 10 ein Entriegelungshebel 7 schwenkbar gelagert. Dieser Entriegelungshebel hat ein Griffstück 8, das zur Erhöhung der Griffigkeit mit feinen Rillen versehen ist. Der Entriegelungshebel hat ausserdem einen Schwenkarm 9, der bis in den Bereich einer quer verlaufenden Sperrleiste 6 reicht. Am Griffstück 8 ist ausserdem ein Schlüsselabschnitt 16 angeordnet, der ein bestimmtes Muster von Vorsprüngen 18 aufweist.

Das Buchsenteil 3 gemäss Figur 2 ist etwas vereinfacht dargestellt. Es besteht jedoch im wesentlichen aus einem kastenartigen Buchsengehäuse 13, in das von beiden Seiten her ein Steckerteil eingeschoben werden kann. Dabei handelt es sich in der Regel um sogenannte Mittelteile, die beispielsweise an einer Gehäusewand montiert werden können. Alternativ könnte ein derartiges Buchsenteil aber auch unmittelbar Bestandteil eines Steckergehäuses sein. Wie beispielsweise aus der eingangs erwähnten EP-A-468 671 ersichtlich ist, müssen auch nicht zwingend von beiden Seiten her gleichartige Steckerteile in das Mittelteil eingesteckt werden können. Die Sperrklinken könnten auch nur auf einer Seite angeordnet sein.

In Figur 2 sind die seitlichen Führungsnuten 23 sichtbar, in denen die Führungsleisten 24 geführt werden. Der obere Teil des Steckergehäuses wird durch die beiden federnden Zungen 15 gebildet, an deren Ende je eine Sperrklinke 5 angeordnet ist. An jedem Eingang des Buchsenteils ist ein Sicherungsabschnitt 17 angeordnet, in welchem Aussparungen 19 vorgesehen sind, die mit den Vorsprüngen 18 des Steckerteils 1 korrespondieren. Beim Einschieben eines Steckerteils 1 in das Buchsenteil 3 rastet die Sperrklinke 5 hinter die Sperrleiste 6 am Stekkerteil ein. Dies ist jedoch nur möglich, wenn die Codierung am Schlüsselabschnitt 16 und am Sicherungsabschnitt 17 übereinstimmt. Wenn die Codierung nicht übereinstimmt, kann das Steckerteil nicht ausreichend tief eingeschoben werden und eine Herstellung der Steckverbindung ist nicht möglich.

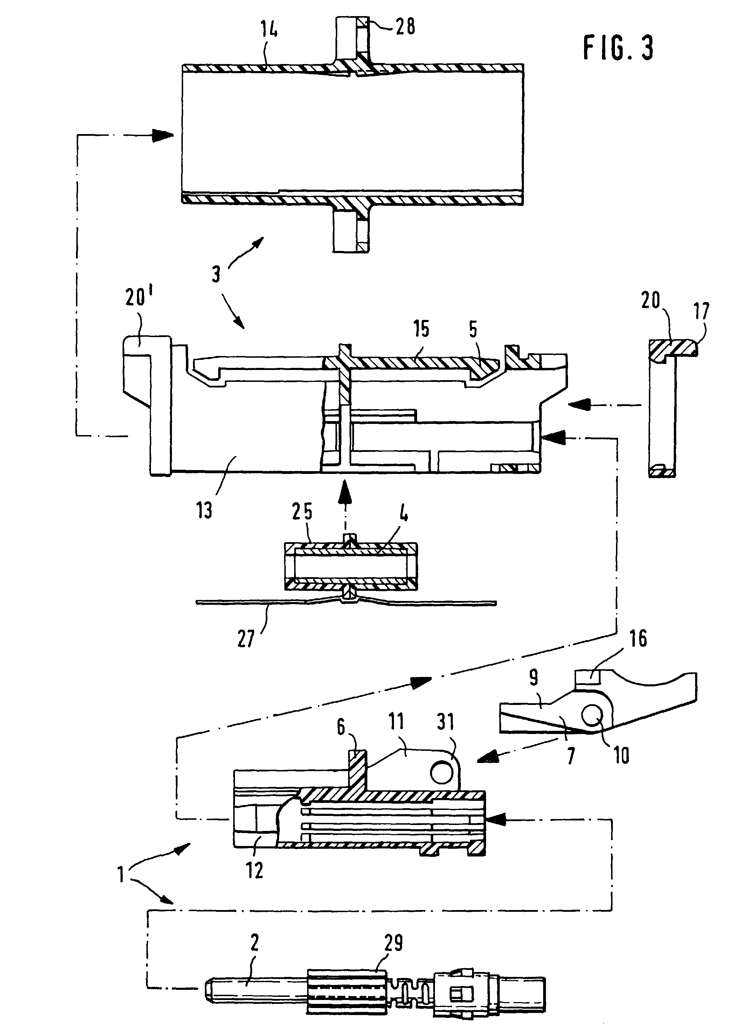

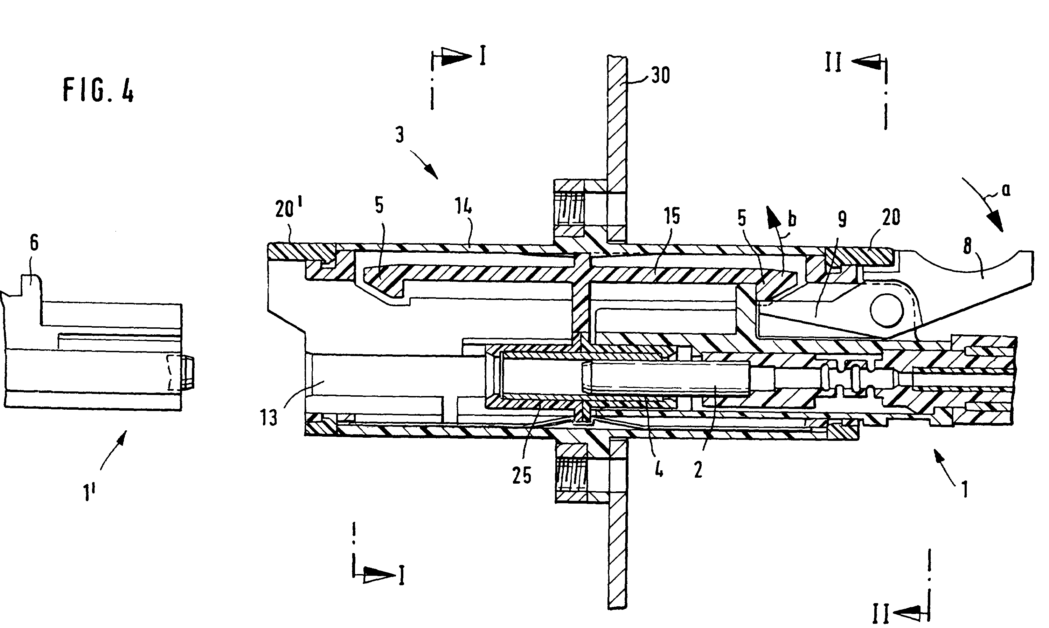

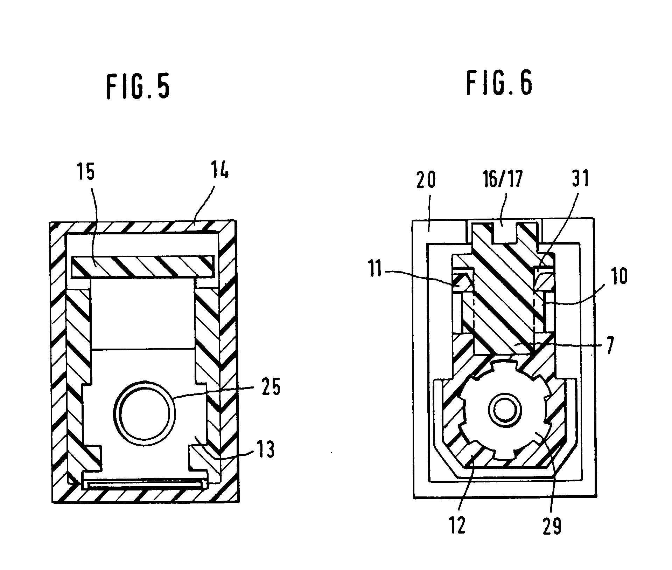

Die Figuren 3 und 4 zeigen die einzelnen Bauteile etwas genauer, wobei hilfsweise noch auf die Querschnitte gemäss den Figuren 5 und 6 hingewiesen wird.

Aus Figur 3 ist ersichtlich, dass das Buchsenteil 3 eigentlich aus verschiedenen Bauteilen besteht. Das innere Buchsengehäuse 13 ist dabei in ein äusseres Buchsengehäuse 14 geschoben, welches beispielsweise einen Flansch 28 für die Befestigung an einer Gehäusewand 30 aufweist. Zur Sicherung des inneren Buchsengehäuses im äusseren Buchsengehäuse dienen die Endabschnitte 20 und 20', welche auf das innere Buchsengehäuse aufgeschnappt werden können. Diese Endabschnitte bilden Aufsteckrahmen, welche gleichzeitig den Sicherungsabschnitt 17 mit der Codierung tragen. Auf diese Weise können am gleichen Buchsengehäuse verschiedene Rahmen mit verschiedenen Codierungen aufgesteckt werden. Diese Rahmen können jeweils gleich eingefärbt sein, wie die dazugehörigen Entriegelungshebel mit der korrespondierenden Codierung. Dagegen können das Buchsengehäuse 14 und das Steckergehäuse 12 stets die gleiche Farbe haben.

Das innere Buchsengehäuse 13 nimmt aber auch die zylindrische Buchsenhalterung 25 mit der eigentlichen Buchse 4 auf, welche vorzugsweise schwimmend gelagert ist. Die Buchsenhalterung wird von unten her durch eine Öffnung in das innere Buchsengehäuse 13 geschoben und durch das äussere Buchsengehäuse 14 in dieser Position festgehalten. Unter der Buchsenhalterung 25 ist ein Federbügel 27 eingeklemmt, der die Buchsenhalterung nach oben vorspannt.

Das eigentliche Steckerteil 1 besteht ebenfalls aus mehreren Bauteilen. Im Steckergehäuse 12 ist eine Stifthalterung 29 verdrehsicher gelagert. In dieser Stifthalterung ist der eigentliche Steckerstift 2 befestigt. Dieser Steckerstift ist hochpräzise bearbeitet und passt exakt in die Buchse 4 am Buchsenteil. Der Lichtwellenleiter ist zentrisch im Steckerstift 2 gefasst.

Einstückig mit dem Steckergehäuse 12 ausgebildet ist die Sperrleiste 6, welche zur besseren Aufnahme der Sperrklinke 5 vorne etwas angeschrägt ist. Unmittelbar an die Sperrleiste schliesst sich die Lagergabel 11 an, welche Öffnungen zur Aufnahme der Gelenknocken 10 im Entriegelungshebel 7 aufweist. Um das Einprellen der Gelenknocken in der Lagergabel zu erleichtern, ist letztere ebenfalls mit Anschrägungen 31 versehen.

Nachdem auch der Entriegelungshebel 7 ein separates Bauteil ist, lassen sich wie bei den Rahmen 20, 20' Entriegelungshebel mit unterschiedlichen Schlüsselabschnitten 16 herstellen, so dass jeweils bei der Montage entschieden wird, welche Steckerteile in welche Buchsenteile passen sollen.

Figur 4 zeigt das Buchsenteil 3, das an einer Gehäusewand 30 montiert ist. Auf der rechten Seite des Buchsenteils ist bereits ein Steckerteil 1 eingesteckt. Dabei ist die Sperrklinke 5 hinter die Sperrleiste 6 eingerastet und der Stekkerstift 2 ist bis in die Mitte in die Buchse 4 eingedrungen.

Auf der linken Seite ist der vordere Teil eines Steckers sichtbar, der gerade eingesteckt wird. Unter der Voraussetzung, dass die Codierung am Steckerteil und am Buchsenteil übereinstimmt, kann der Stecker soweit eingesteckt werden, bis die Sperrklinke 5 einrastet.

Soll nun der Stecker wieder aus dem Buchsenteil entfernt werden, so muss auf das Griffstück 8 eine Kraft in Pfeilrichtung a ausgeübt werden. Der unmittelbar unter der Sperrklinke 5 liegende Schwenkarm 9 bewegt dadurch die Sperrklinke in Pfeilrichtung b nach oben, bis sie über die Sperrleiste 6 angehoben ist. Ersichtlicherweise muss das äussere Buchsengehäuse 14 der Sperrklinke genügend Freiraum lassen. Sobald die Sperrklinke ausgerastet ist, kann der Stecker aus dem Buchsenteil herausgezogen werden, wobei auf das Buchsenteil und damit auf die Gehäusewand 30 nur gerade noch diejenige Zugkraft ausgeübt wird, welche erforderlich ist, um die Reibungskräfte zu überwinden.

Selbstverständlich sind andere Ausführungsformen der Erfindung denkbar. So könnte beispielsweise jedes Steckerteil mit zwei gegenüberliegenden Sperrklinken festgehalten werden, wobei dann auch zum Öffnen zwei Entriegelungshebel erforderlich wären, welche gegensinnig betätigt werden müssten. Anstelle von schwenkbaren Entriegelungshebeln könnten diese aber auch auf andere Weise ausgebildet sein, um die Sperrklinke 5 anzuheben. Denkbar wären etwa seitlich angeordnete Schieber, welche zum Anheben der Sperrklinke in das Gehäuse hineingepresst werden müssen. Auch die spezifische Ausgestaltung des Stekkerteils ist nicht erfindungswesentlich. So könnte z.B. das Steckerteil einen automatisch öffnenden Schutzdeckel aufweisen oder es könnte sich um ein Steckerteil handeln, das parallel mehrere Steckerstifte trägt.

## Patentansprüche

1. Steckverbindung für einen Lichtwellenleiter mit einem Steckerteil (1), das wenigstens einen Steckerstift (2) aufweist und mit einem Buchsenteil (3), das wenigstens eine Buchse (4) zur Aufnahme des Steckerstifts aufweist, wobei zur Sicherung des im Buchsenteil eingesteckten Steckerteils eine Einrastvorrichtung vorgesehen ist, welche wenigstens eine am Buchsenteil angeordnete, federnde Sperrklinke (5) aufweist, die bei ganz eingestecktem Steckerteil hinter einem Sperrelement (6) einrastbar ist, wobei neben dem Sperrelement (6) ein Entriegelungshebel (7) angeordnet ist, mit dem die Sperrklinke (5) ausrastbar ist, dadurch gekennzeichnet, dass der Entriegelungshebel ein am Steckerteil schwenkbar gelagerter Doppelhebel bestehend aus einem Griffstück (8) und einem bis an das Sperrelement (6) reichenden Schwenkarm (9) ist.

2. Steckverbindung nach Anspruch 1, dadurch gekennzeichnet, dass der Entriegelungshebel (7) ein Paar Gelenknocken (10) aufweist, welche in eine Lagergabel (11) am Stekkerteil einrastbar sind.

3. Steckverbindung nach Anspruch 2, dadurch gekennzeichnet, dass das Steckerteil ein Steckergehäuse (12) aufweist und dass das Sperrelement und die Lagergabel einstückig mit dem Steckergehäuse ausgebildet sind.

4. Steckverbindung nach einem der Ansprüche 1 bis 4, dadurch gekennzeichnet, dass das Buchsenteil (3) ein inneres Buchsengehäuse (13) aufweist und dass die Sperrklinke (5) an einer federnden Zunge (15) angeordnet ist, welche einstückig mit dem inneren Buchsengehäuse ausgebildet ist.

5. Steckverbindung nach einem der Ansprüche 1 bis 4, dadurch gekennzeichnet, dass der Entriegelungshebel (7) einen Schlüsselabschnitt (16) mit einer aus Vorsprüngen und Aussparungen bestehenden Codierung aufweist und dass der Schlüsselabschnitt in einen Sicherungsabschnitt (17) am Buchsenteil mit einer korrespondierenden Codierung eingreift, wobei der Schlüsselabschnitt und der Sicherungsabschnitt so angeordnet sind, dass die Sperrklinke (5) nur bei übereinstimmender Codierung einrastbar ist.

6. Steckverbindung nach Anspruch 4 und 5, dadurch gekennzeichnet, dass das innere Buchsengehäuse (13) in ein äusseres Buchsengehäuse (14) eingeschoben ist, dass das innere Buchsengehäuse im äusseren Buchsengehäuse durch einen Endabschnitt (20) gesichert ist, der an einem der Buchsengehäuse (13, 14) befestigt ist und dass dieser Endabschnitt mit dem Sicherungsabschnitt (17) versehen ist.

7. Steckverbindung nach Anspruch 6, dadurch gekennzeichnet, dass der Endabschnitt ein Aufsteckrahmen (20) ist, der auf das innere Buchsengehäuse (13) aufsteckbar ist.

8. Steckverbindung nach einem der Ansprüche 1 bis 7, dadurch gekennzeichnet, dass das Buchsenteil (3) als ein Mittelteil ausgebildet ist, derart at dass von beiden Seiten ein Steckerteil einschiebbar ist und dass für jedes Steckerteil im Buchsenteil jeweils eine Sperrklinke angeordnet ist.

## Claims

1. A plug connection for an optical fibre comprising a plug member (1) which has at least one plug pin (2), and a socket member (3) which has at least one socket (4) for receiving the plug pin, wherein for securing the plug member when inserted in the socket member there is provided a latch device which has at least one resilient locking pawl (5) which is arranged on the socket member and which can be latched behind a locking element (6) when the plug member is entirely inserted, wherein arranged beside the locking element (6) is a release lever (7) with which the locking pawl (5) is disengageable, characterised in that the release lever is a double lever mounted pivotably on the plug member and comprising a grip portion (8) and a pivot arm (9) extending to the locking element (6).

2. A plug connection according to claim 1 characterised in that the release lever (7) has a pair of pivot projections (10) which can be latched into a mounting fork (11) on the plug member.

3. A plug connection according to claim 2 characterised in that the plug member has a plug housing (12) and that the locking element and the mounting fork are formed integrally with the plug housing.

4. A plug connection according to one of claims 1 to 4 characterised in that the socket member (3) has an inner socket housing (13) and that the locking pawl (5) is arranged on a resilient tongue (15) which is formed integrally with the inner socket housing.

5. A plug connection according to one of claims 1 to 4 characterised in that the release lever (7) has a code portion (16) with a coding comprising projections and recesses, and that the code portion engages into a securing portion (17) on the socket member with a corresponding coding, wherein the code portion and the securing portion are so arranged that the locking pawl (5) is engageable only when the coding coincides.

6. A plug connection according to claim 4 and claim 5 characterised in that the inner socket housing (13) is inserted into an outer socket housing (14), that the inner socket housing is secured in the outer socket housing by an end portion (20) which is fixed to one of the socket housings (13, 14), and that said end portion is provided with the securing portion (17).

7. A plug connection according to claim 6 characterised in that the end portion is a push-on frame (20) which can be fitted onto the inner socket housing (13).

8. A plug connection according to one of claims 1 to 7 characterised in that the socket member (3) is in the form of a central member in such a way that a plug member can be inserted from both sides and that a respective locking pawl is arranged in the socket member for each plug member.

## Revendications

1. Connecteur pour une fibre optique, comportant un élément formant fiche (1) pourvu d'au moins une broche (2), et un élément formant alvéole (3) pourvu d'au moins une alvéole (4) destinée à recevoir la broche, étant précisé qu'il est prévu, pour assujettir l'élément formant fiche introduit dans l'élément formant alvéole, un dispositif d'encliquetage qui comporte au moins un cliquet d'arrêt (5) faisant ressort, disposé sur l'élément formant alvéole et apte à s'encliqueter derrière un élément d'arrêt (6) quand l'élément formant fiche est complètement introduit, et étant précisé qu'il est prévu, près de l'élément d'arrêt (6), un levier de déverrouillage (7) à l'aide duquel le cliquet d'arrêt (5) peut être désenclenché, caractérisé en ce que le levier de déverrouillage est constitué par un double levier, monté pivotant sur l'élément formant fiche, formé d'une manette (8) et d'un bras pivotant (9) qui va jusqu'à l'élément d'arrêt (6).

2. Connecteur selon la revendication 1, caractérisé en ce que le levier de déverrouillage (7) comporte une paire de saillies d'articulation (10) qui sont aptes à s'encliqueter dans une fourche d'appui (11) prévue sur l'élément formant fiche.

3. Connecteur selon la revendication 2, caractérisé en ce que l'élément formant fiche comporte une enveloppe de fiche (12), et en ce que l'élément d'arrêt et la fourche d'appui sont réalisés d'une seule pièce avec l'enveloppe de fiche.

4. Connecteur selon l'une des revendications 1 à 3, caractérisé en ce que l'élément formant alvéole (3) comporte une enveloppe d'alvéole intérieure (13), et en ce que le cliquet d'arrêt (5) est disposé sur une languette faisant ressort (15) qui est réalisée d'une seule pièce avec l'enveloppe d'alvéole intérieure.

5. Connecteur selon l'une des revendications 1 à 4, caractérisé en ce que le levier de déverrouillage (7) comporte une section formant clé (16) pourvue d'un codage formé de saillies et de creux, et en ce que la section formant clé pénètre dans une section d'assujettissement (17) prévue sur l'élément formant alvéole et pourvue d'un codage correspondant, la section formant clé et la section d'assujettissement étant disposées de telle sorte que le cliquet d'arrêt (5) n'est apte à s'encliqueter qu'en présence de codages coïncidents.

6. Connecteur selon les revendications 4 et 5, caractérisé en ce que l'enveloppe d'alvéole intérieure (13) est glissée dans une enveloppe d'alvéole extérieure (14), en ce que l'enveloppe intérieure est assujettie dans l'enveloppe extérieure grâce à une section d'extrémité (20) qui est fixée à l'une des enveloppes d'alvéole (13, 14), et en ce que cette section d'extrémité est pourvue de la section d'assujettissement (17).

7. Connecteur selon la revendication 6, caractérisé en ce que la section d'extrémité est constituée par un châssis d'emboîtement (20) qui est apte à être emboîté sur l'enveloppe d'alvéole intérieure (13).

8. Connecteur selon l'une des revendications 1 à 7, caractérisé en ce que l'élément formant alvéole (3) est conçu comme un élément central, de sorte qu'un élément formant fiche peut être glissé par les deux côtés, et en ce que, dans l'élément formant alvéole, un cliquet d'arrêt est prévu pour chaque élément formant fiche.
